# EUROPEAN PATENT APPLICATION

(11) **EP 1 921 398 A2**
(43) Date of publication of application: **14.05.2008**
(21) Application number: 07009903.1
(22) Date of filing: 18.05.2007
(51) Int. Cl.: F24J 2/04, F24J 2/40, F24J 2/51

(54) **Transparent insulation system with trap**

(30) Priority: 09.10.2006 HU 0600769
(71) Applicant: Parag, László, H-4551 Nyíregyháza-Oros (HU); Györi, Miklós, H-8227 Felsöörs (HU); Lipoczi, István, H-8227 Felsöörs (HU)
(72) Inventor: Parag, László, H-4551 Nyíregyháza-Oros (HU); Györi, Miklós, H-8227 Felsöörs (HU); Lipoczi, István, H-8227 Felsöörs (HU)
(74) Representative: Emri, Jozsefné

(57) **Abstract**

The subject of the invention is a transparent insulation system with trap, which through the reduced heat loss of heat storage surfaces, as well as through the selective transmission of light, can efficiently reduce the heating energy needs of buildings. The transparent insulation system with trap comprises a ribbed roof cover transmitting light selectively, the steps, ribs (1) of which are perpendicular to the slope of the roof with a deviation of maximum ±20°. The ribbed roof cover lets in the sun light in the winter, and reflects the sun rays in the summer. The insulation system also comprises a shape changing insulation (2) with changeable heat conducting properties, incorporating an absorber (10) absorbing the arriving solar radiation, and changing its insulating properties according to whether heating or shading is needed.

## Description

The subject of the invention is a transparent insulation system with trap, which by means of the heat insulation of heat storage spaces, using an insulation with changeable properties, and due to the selective light transmission of the structural elements, can efficiently reduce the heating energy needs of buildings.

Nowadays, with the decrease in fossil energy carriers, the utilization of solar energy reaching the Earth has come to the fore. The accumulation of solar energy in building structures reduces the amount of energy needed for heating, tempers the interior spaces, and on the whole improves the quality of life of the inhabitants.

The utilization of solar energy with the construction of mass walls or Tromble walls is an already known procedure. Their wider use, however, is prevented by two circumstances.

On the one hand, transparent materials (e.g. flat glass) have good heat conductivity, that is in the sunless hours they release the trapped heat into the atmosphere. The convection heat loss during the night is reduced by a multi-layer glass wall possibly filled with gas, which, however, significantly increases the project costs. Unfortunately, the heat transmission coefficient of about 1.5 [W/m²K] achievable this way is still a high value compared to the relatively low heating effect produced by the sun.

On the other hand, heated mass walls may overheat in the summer. Shading is required to protect against the heat load in the summer. The shading solution again increases the project costs.

Several technical solutions are known in the literature for increasing the efficiency of the trapping of solar energy.

The solution described in patent application No. US 2005/0061312 significantly reduces the heat loss due to emission, and gives a partial solution for shading as well. An absorber behind a transparent insulation can be moved pneumatically, moving the absorber surface away from a heat storage. The air gap generated behind the absorber can be ventilated, thus preventing the overheating of the heat storage. The inventors solved the reduction of heat loss by applying a phase changing material for the heat storage. Such materials can transfer their latent heat into the interior space during their phase change (at 29°C). The relatively low storage temperature reduces the heat loss occurring primarily through the transparent surfaces. This technical solution, however, is very costly, and from the phase changing material and the multi-layer glass a considerable weight has to be mounted on the wall.

The so called active systems with solar collectors cannot solve economically the storage of heat either, as such systems have high installation costs, and a low rate of return. Most of these solutions are used mainly for the pre-heating of water, or the production of service water. For auxiliary heating the heat of the sun is transferred through the piping of floor or wall heating. During the winter months the heat-gain is low due to the relatively small collector surface and the low radiation.

According to patent No. DE 3928450 the trapping of solar energy can be solved by applying a saw-tooth roof perpendicular to the slope of the roof. This technical embodiment solves the selective transmission of light, but its structure consists of a combination of metal and glass, which involves the danger of breaking due to the different heat expansion of the materials. The draining of rain water is possible only by means of a valley made of a metal plate. The most critical points of the roof are the valley, from the point of view of leaking, and the valley drain from the point of blocking.

A possible method for the selective transmission of light is the application of plastic, primarily acrylate plates, the back side of which is grooved, slotted by laser, and thus ribbed in the manner described in patent application No. US 0200182. The subsequent slots-ribbing of plastic plates is a significant cost increasing factor, furthermore, because of the strength reducing effect of the undercut ribs, the application of thick plastic plates is necessary. For transparent insulation systems this method of solving the selective transmission of light is not advantageous, because when it is applied on the roof, the optical path of the light to be reflected passes through the attic, and the attic is heated due to the unwanted scattering caused by the beams and the deposited dust.

The aim of the invention is to provide a transparent insulation system with trap, eliminating the deficiencies of the known solutions, that operates efficiently even at low radiation values, and can be implemented economically on large surfaces.

The transparent insulation system with trap according to the invention comprises on the one hand a ribbed roof cover transmitting light selectively, and on the other hand a shape changing insulation with changeable heat conducting properties.

The invention is based on the following recognitions:
- Panel ribbing placed perpendicularly on the main supports allows the simple formation of saw-tooth skylights for the transparent roof covers, and also provides considerable mechanical strength, making the use of auxiliary supports unnecessary. The ribbing placed perpendicularly on the main supports allows the connection of the roof panels to almost vertical surfaces, thereby the risk of roof leaks is minimized. The ribbing can at the same time ensure the selective transmission of light as well, by means of a reflective coating on the ribs.
- Open cell foams of low body density, or fibrous insulations can change their heat conductivity as a function of compression, while the change in their specific conductivity is insignificant. This capability can be used for the implementation of alternating heating and insulation.
- If a small part of a tubular, but flattened reflective surface is fixed both to an outer surface and to a moveable absorber, its reflectivity changes as a function of the movement of the absorber. This way a mechanically controlled method for heat absorption or heat reflection can be implemented.

The ribbed roof cover according to the invention is such a stepped, ribbed plastic panel, the steps, ribs of which are perpendicular to the slope of the roof, or deviate from that by maximum ±20°. The almost horizontal surfaces of the roof cover have a light reflecting coating, while the almost vertical surfaces are transparent, forming a skylight. The stepped, ribbed roof cover replaces the roofing. In order to prevent the penetration of water, the large ribbed roof plates, similarly to traditional roof covering, have folded seams or double drip grooves on the sides. There is an underlay foil under the ribbed roof plate, laid on the roof surface between the sloping beams, which has bands of light reflecting and light transmitting surfaces in the direction of the ribs of the ribbed roof plates. The light reflecting foil surfaces are under the inclined surfaces of the stepped, ribbed roof plate in contact with the sloping beams, in a width determined by the orientation of the building and the prevailing angle of incidence of the sun. At higher northern latitudes, that is at lower angles of incidence of the sun, the reflective band of the foil is narrower. This combined solution ensures that sun rays arriving at lower angles are let into the attic, while sun rays arriving at higher angles are reflected.

Sun rays let into the attic selectively by the roof cover arrive on a shape changing insulation with changeable heat conducting properties. The shape changing insulation is a laminated system capable of internal shape changing, fixed to the building structure with spacers, comprising an insulating material sealed with a flexible sealing, a moveable absorber, a light transmitting protective plate, and a light reflector capable of shape changing.

The light transmitting protective plate is on the sun side of the shape changing insulation with changeable heat conducting properties. Under the protective plate is the tubular light reflecting layer capable of shape changing, which can be flattened. Under the light reflector is the absorber converting the light into heat energy. The light reflector is fixed to the protective plate and the absorber in a point-like manner. The absorber surface in contact with the light rays converts the kinetic energy of the photons of the sun light into heat energy, which is transferred to the building structure through the insulating material and the spacers. Under the absorber is the fibrous or open cell heat insulating material sealed with the flexible sealing, which can be compressed. A vacuum pump is connected to the flexible sealing. The shape changing insulation is fixed to the building structure with spacer-bolts.

Open cell foams of low body density, or fibrous insulations are capable of changing their heat transmitting capacity as a function of their compression, as then the amount of air contained in the structure is reduced, thus the heat conductivity of the solid parts improves. This means that heat transmission is higher when the thickness of the insulation layer is lower, than when the cross section of the insulation is thicker. By applying a flexible flat sealing, the physical properties of a fibrous or open cell insulation can be controlled with a simple vacuum pump, using the ambient pressure, thus a shape changing insulation with trap can be constructed, which at a low layer thickness lets the arriving heat energy into the building, and at a high layer thickness does not let it back into the atmosphere, that is it is trapped. By pumping out the air layer located between the foils, the insulating material is compressed by the atmospheric pressure itself.

When the transparent insulation system with trap is installed and operated, the incident sun rays let in selectively by the ribbed roof plate and the underlay foil having a reflective foil surface pass through the transparent protective plate of the shape changing insulation unhindered, and reach its light reflecting surface. Then the vacuum pump is operated and the insulating material is compressed by the ambient pressure. At the same time the shape of the tubular light reflector changes, and the layer of the shape changing insulation closer to the sun light becomes transparent to the light. Then the sun rays reach the surface of the absorber unhindered. The absorber converts the energy of the sun into heat energy, which is let into the building structure by the insulating material changed to a low layer thickness by the vacuum pump, and the spacers, that is the wall or the ceiling is heated. As a result of the flexibility of the insulation, when the vacuum is terminated, the insulating material regains its original size and the light reflector opens, covering the surface of the absorber from the light. Thus the heat energy transferred by the sun rays remains in the building, that is it is trapped.

The preferred embodiments of the transparent insulation system with trap according to the invention are shown in detail in the following figures, where
Figure 1: is a cross-sectional drawing of the transparent insulation system with trap installed on a building structure. (South side on the right-hand side of the figure.)
Figure 2: is a cross-sectional drawing of the ribbed roof cover under winter light conditions.
Figure 3: is a cross-sectional drawing of the ribbed roof cover under summer light conditions.
Figure 4: is a cross sectional drawing of the shape changing insulation 2 of the transparent insulation system with trap in a reflective state.
Figure 5: is a cross-sectional drawing of the shape changing insulation 2 of the transparent insulation system with trap in a compressed state.

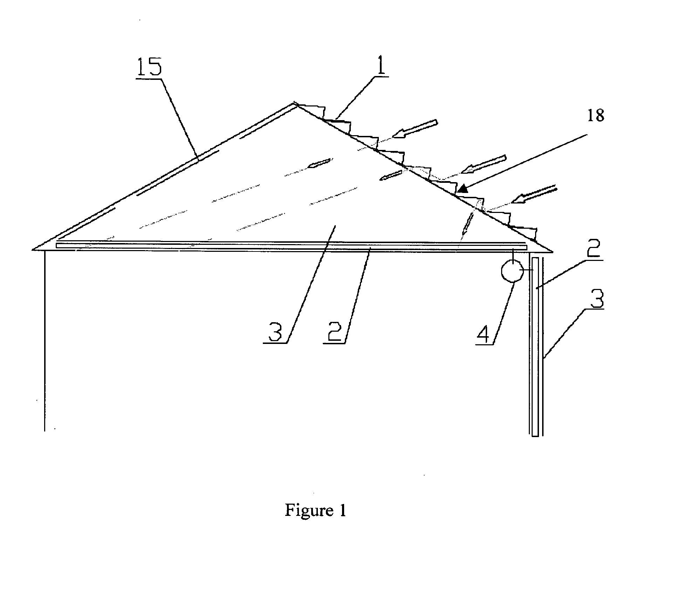

Figure 1 shows the ribbed roof cover transmitting light selectively, preferably made of a glass-fibre polyester plate or acrylic plate. The roof cover is stepped, ribbed, which is preferable not only for aesthetic reasons, but the steps, ribs 1 play a role in the selective reflection and selective transmission of light as well. The steps, ribs 1 are perpendicular to the slope of the roof, the deviation from the perpendicular can be maximum ±20°. Due to the stepping, ribbing of the ribbed roof cover, the plastic roof plate is sufficiently strong to span the generally 1m span in the support structure 8, and to bear the snow and wind loads. The manufacturing technology of glass-fibre polyester plates allows the ribbed roof cover to be made in one piece, practically free of overlapping in the direction of the support structure 8, it has to be joined only in the direction parallel with the ridge, on the vertical surface of the ribbed roof cover. This solution provides high water-tightness for the roof. The stepping prevents the snow from covering the transparent almost vertical ribbed roof cover surfaces functioning as "skylights" 18. These almost vertical ribbed roof cover surfaces serve for letting in the light (indicated by empty arrows in the drawings).

When there is only a little amount of snow, it does not reach the height of the skylight, the light can get into the attic, heating it, and the snow melts on the slightly sloping surfaces.

When suddenly a large amount of snow falls, the almost vertical face and the almost horizontal face of the step, forming a wedge, heat the snow from two sides, reducing the height of the snow locally, then melting takes place in the manner described for a little amount of snow. The almost vertical surface of the ribbed roof cover is self-cleaning. The ends of the ribbed roof cover (at projecting roof elements, the intersection of roof planes) are sealed with profiled edge-covers to provide a water-tight connection.

The shape changing insulation 2 shown in Figure 1 can be installed on the ceiling structure and/or on the side wall under a side cover 3. The shape changing insulation 2 is connected to a vacuum pump 4.

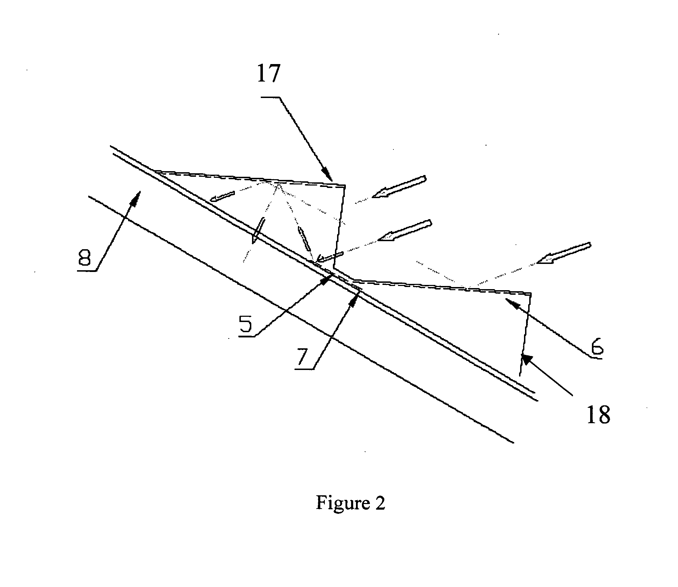

Figure 2 shows an enlarged cross-sectional drawing of the ribbed roof cover with the support structure 8 under winter light conditions. Then, because of the lower angles of radiation, the ribbed roof cover lets through the low incident light in full, not considering the light absorption losses. The almost horizontal flat surface 17 of the ribbed roof cover has a light reflecting coating 6 on the inside, having good light reflectivity. An underlay foil 7 with adequate UV stability is fixed to the ribbed roof cover with adhesive. There is a sealed air layer of varying cross section between the underlay foil 7 and the ribbed roof cover, which insulates. The underlay foil 7 has a reflective foil surface 5 under the part of the ribbed roof cover lying on the support structure 8. This reflective foil surface 5 serves for reflecting the sun rays passing directly through the almost vertical skylight surface 18 of the ribbed roof cover 4 at an angle of almost 45 degrees, which is the characteristic angle of incidence of the sun rays at noon in May in Central-Europe. The skylight surface 18 is perpendicular to the support structure 8, or deviates from that only by ±20°. With the proper positioning of the reflective foil surface 5 of the underlay foil 7 during manufacturing, the amount of incident light can be controlled without changing the size of the skylight 18. Thus the amount of light can be reduced, or increased according to the geographical location and the mass of the building, without any geometric changes in the outside cover. With this solution the overheating of the building can be avoided.

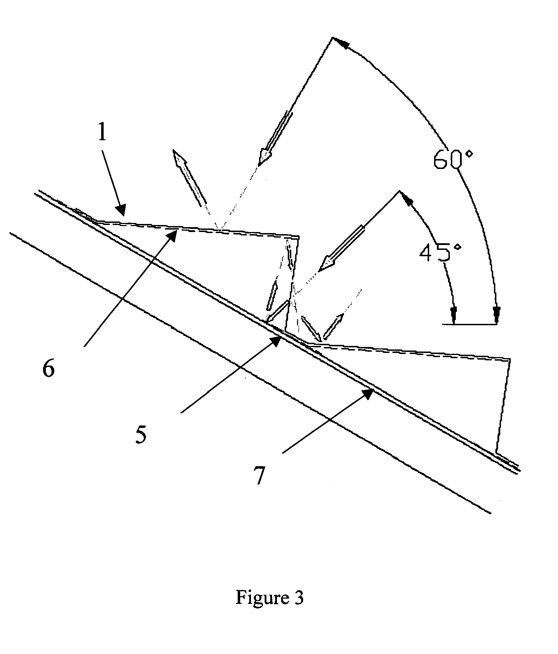

Figure 3 shows a cross-sectional drawing of the ribbed roof cover under summer light conditions. Figure 3 also shows the higher angles of incidence of the sun, 45-60 degrees, and the reflections characteristic of the summer. Then the ribbed roof cover reflects the perpendicular incident light in full by means of the light reflecting coating 6, or the reflective foil surface 5 of the underlay foil 7, or possibly the combination of the two.

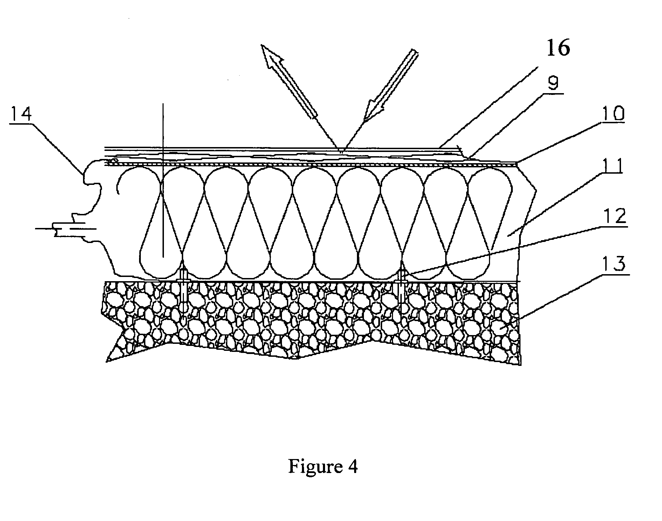

Figure 4 shows the shape changing insulation 2 of the transparent insulation system with trap in a reflective state. The shape changing insulation 2 comprises an insulating material 11, which is fixed to the building structure 13 with spacer-bolts 12. The shape changing insulation 2 also comprises a flexible sealing 14, hermetically sealing the insulating material 11, an absorber 10, a light reflector 9, and a protective plate 16 placed above it. In the basic state shown in Figure 4 the insulating capacity is at the maximum, the absorber 10 is covered by the light reflector 9, there is no heat intake.

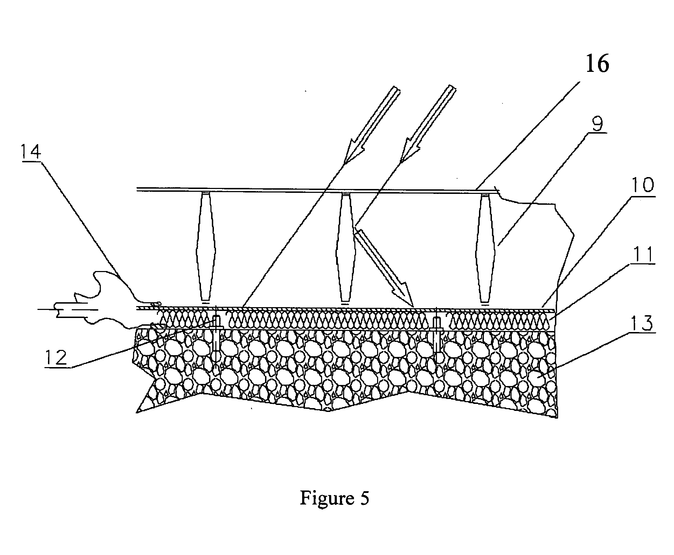

Figure 5 shows the shape changing insulation 2 in a compressed state. As it is shown by the figure, the total size of the shape changing insulation 2 having a laminated structure has not changed, only the thickness of the insulating material 11 decreased and the size of the light reflector 9 increased. The light reflector 9 changed from a flattened to a tubular state. The light reflector 9 is fixed to the protective plate 16 and the absorber 10 in a point-like manner. The insulating material 11 is connected to a vacuum pump 4 through the flexible sealing 14. The shape changing insulation 2 is fixed to the building structure 13 with spacer-bolts 12.

Figure 5 shows the insulation with changeable properties 2 with the absorber 10 in a compressed state. In this basic state the insulating capacity is at the minimum, the absorber 10 is not covered by the light reflector 9. The absorber 10 is a thin metal plate painted in black. When the absorber 10 is not covered by the light reflector 9, it is capable of efficiently absorbing the energy of the sun light. The insulating material 11 is preferably glass-fibre cotton, or open cell plastic foam. In that case, in spite of a small decrease in specific heat conductivity, the heat transmitting capacity (heat conductivity coefficient) increases 5-8 times in proportion to the compression. The absorber 10 can transfer a part of the heat absorbed by it to the elements of the building structure 13 directly through the insulating material 11, most of the absorbed heat is transferred to the building structure 13 by the spacers 12 made of metal. These spacers 12 are made of a material having good heat conductivity, they can be pins, or bolts, or possibly thin plates, but they cannot have a large surface in order to ensure that there is metal contact through the insulating material 11 with the absorber 10, but at the same time after the expansion of the insulating material 11 no heat-bridge is formed due to the air gap. The light reflector 9 is a tubular structural element having good reflective properties, preferably a metallized plastic (PEM) foil or a laminated aluminium foil. It is fixed with adhesive in its flattened state preferably in a narrow band to both the protective plate 16 and the absorber 10.

For the application of the transparent insulation system with trap, the ribbed roof cover shall be installed on the roof plane, the shape changing insulation 2 on the attic side of the ceiling, or possibly on the side wall under a transparent side cover 3. In the winter the sun rays arriving at low angles of incidence reach the shape changing insulation 2 through the skylight surface 18 unhindered. Then a solar energy or mains electricity driven vacuum pump 4 shall be operated, as a result of which the height of the insulating material 11 decreases and the light reflector 9 becomes tubular. Then the light reaches the absorber 10 placed on the insulating material 11 through the protective plate 16 unhindered. The insulating material 11 having good heat transmission in the compressed state transfers the heat amount to the building structure 13 through the spacers 12. The vacuum pump 4 produces a rough vacuum, just enough for compressing the insulating material 11. In practice its value is around 1000 Pascal. The vacuum sealing is ensured by the flexible sealing 14. The ambient pressure reduces the thickness of the insulating material 11 until it is stopped by the metal spacers 12. The height of the insulating material 11 is determined by the type of the applied material. For example, when a glass-fibre insulating material 11 is compressed to 1/8^{th} of its original thickness, the resin bond between the glass fibres is damaged only to a small extent, it can regain and retain its original thickness after the termination of the vacuum. This is facilitated by the vacuum pump 4 with overpressure pulses of 10-20 Pascal, lasting for a few seconds. After turning off the vacuum pump 4 the insulating material 11 expands, its heat conductivity is considerably reduced, thus the heat absorbed by the structural elements 13 flows only towards the interior of the building, the trap is closed. The amount of stored heat depends to a large extent on the specific heat of the building structure 13, or the amount of material built into the structure. The transparent insulation system with trap works with especially good efficiency with high mass, so called traditional building materials, such as adobe.

According to a second preferred embodiment, in order to reduce the project costs, the transparent insulation system with trap can be implemented in part as well, in such a way that only the ribbed roof cover and the underlay foil 7 are installed, under which a metal backed insulation 15 is placed in the traditional manner (see again Figure 1). Then the shape changing insulation 2 with the absorber 10 is not installed. In this case the trap is the building structure 13 itself, with the sealed attic.

According to a third preferred embodiment the shape changing insulation 2 is placed on the outside of the side wall, as shown by the side wall portion in Figure 1. Then the shape changing insulation 2 shall be placed under a transparent side cover 3, naturally, the ribbed roof plate and the underlay foil 7 does not need to be installed. The light transmitting side cover 3 is preferably made of a single-layer plastic plate having good light transmission. For aesthetic reasons, on an outside wall the side cover 3 can be articulated or coloured. In this preferred embodiment the shape changing insulation 2 operates in the same way and comprises the same structural elements as described above for the first preferred embodiment. The light incident on the side wall in the manner shown in Figure 4 is reflected because of the flattened state of the light reflector 9 (achieved by turning off the vacuum pump 4). This way the shape changing insulation 2 provides proper protection against the strong sun rays in the summer. For aesthetic reasons the light reflector 9 can be coloured. In the winter the shape changing insulation 2 traps the sun rays arriving at low angles of incidence. Then, with the operation of the vacuum pump 4, the light can reach the absorber 10 because of the tubular state of the light reflector 9. After that the transparent insulation system with trap operates as described for the first preferred embodiment.

The advantage of the transparent insulation system with trap according to the invention is the efficient utilization of solar energy in order to reduce the heating costs of buildings, and the prevention of the overheating of buildings. As the vacuum pump can be driven by solar cells, in addition to the installation costs, the operation of the system does not have any further cost.

### List of references:

1 steps, ribs
2 shape changing insulation
3 side cover
4 vacuum pump
5 reflective foil surface
6 light reflecting coating
7 underlay foil
8 support structure
9 light reflector
10 absorber
11 insulating material
12 spacer
13 building structure
14 flexible sealing
15 metal backed insulation
16 protective plate
17 flat surface
18 skylight surface

## Claims

1. A transparent insulation system with trap, comprising a roof cover transmitting light selectively, a heat insulation, and an absorber absorbing the arriving solar radiation, wherein the roof cover is stepped, ribbed, the steps, ribs (1) are perpendicular to the slope of the roof with a deviation of maximum ±20°, and the heat insulation is a shape changing insulation (2) with changeable heat conducting properties, incorporating the absorber (10).

2. The insulation system according to claim 1, wherein the almost horizontal flat surfaces (17) of the steps, ribs (1) have a light reflecting coating (6).

3. The insulation system according to claim 1, wherein the shape changing insulation (2) is a laminated system capable of internal shape changing, comprising an insulating material (11) sealed with a flexible sealing (14), fixed to the building structure (13) with spacers (12), a moveable absorber (10), a protective plate (16) and a light reflector (9) capable of shape changing, where the light reflector (9) is placed between the absorber (10) and the protective plate (16), and is fixed to them in a point-like manner.

4. The insulation system according to claim 1, wherein the heat conducting properties of the shape changing insulation (2) are controlled with a vacuum pump (4).

5. The insulation system according to claim 1, wherein the light reflector (9) is a metallized plastic foil or a laminated aluminium foil.

6. The insulation system according to claim 1, wherein the height of the spacers (12) determines the maximum compressibility of the insulating material (11).

7. The insulation system according to claim 1, wherein only the stepped, ribbed roof cover is installed.

8. The insulation system according to claim 1, wherein only the shape changing insulation (2) with changeable heat conducting properties is installed, together with the absorber (10).
